# EUROPÄISCHE PATENTSCHRIFT

(11) **EP 2 415 000 B1**
(45) Veröffentlichungstag und Bekanntmachung des Hinweises auf die Patenterteilung: **10.09.2014**
(21) Anmeldenummer: 10715667.1
(22) Anmeldetag: 29.03.2010
(51) Int. Cl.: G06K 19/077, G06K 19/04

(54) **MÜNZE MIT INTEGRIERTER RFID-IDENTIFIZIERVORRICHTUNG UND VERFAHREN ZU DESSEN HERSTELLUNG**
COIN WITH AN INTEGRATED RFID IDENTIFICATION DEVICE AND CORRESPONDING MANUFACTURING METHOD
PIÈCE DE MONNAIE AVEC UN DISPOSITIF D'IDENTIFICATION RFID INTÉGRÉ ET SON PROCÉDÉ DE FABRICATION

(30) Priorität: 30.03.2009 DE 102009015579
(43) Veröffentlichungstag der Anmeldung: 08.02.2012
(73) Patentinhaber: Münze Österreich AG, 1030 Wien (AT); HAMEDANI, Soheil, 85567 Grafing bei München (DE)
(72) Erfinder: HAMEDANI, Soheil, 85567 Grafing bei München (DE); INNITZER, Gregor, AT-1040 Wien (AT)
(74) Vertreter: Graf Glück Kritzenberger
(86) Internationale Anmeldenummer: PCT/DE2010/000350
(87) Internationale Veröffentlichungsnummer: WO 2010/112002

(56) Entgegenhaltungen:
- WO-A2-96/18173

## Beschreibung

Die Erfindung betrifft eine Münze gemäß dem Oberbegriff des Patentanspruches 1 sowie ein Verfahren zur Herstellung einer derartigen Münze gemäß dem Oberbegriff des Patentanspruches 7.

In den Währungen verschiedener Staaten werden Münzen als Zahlungsmittel verwendet, die üblicherweise eine Prägung aufweisen. Derartige Münzen sind aus zumindest einem scheibenförmigen Rohling oder Grundelement aus Metall oder einer Metalllegierung hergestellt.

Auch sind Münzen bekannt, die aus zumindest zwei Teilen, und zwar einen ringförmigen Grundelement und einem vorzugsweise scheibenförmigen Zentral- oder Kernelement gebildet sind. Die genannten Münzelemente können beispielsweise aus unterschiedlichen metallischen Werkstoffen hergestellt sein, um ein spezielles optisches Erscheinungsbild der Münzen zu erzielen. Einzelne derartiger Münzen entsprechen zwischenzeitlich einem Geldbetrag der den Materialwert der jeweiligen Münze bei weiten überschreitet, so dass Maßnahmen zur Identifizierung derartiger Münzen bzw. zur Überprüfung dessen Originalität erforderlich sind.

Ferner ist es bekannt für die Identifizierung und Nachverfolgung von beweglichen Objekten berührungslose Identifizierungssysteme vorzusehen, welche fest mit dem zu identifizierenden Objekt verbunden sind. Hierzu finden häufig so genannte RFID-Identifizierungssysteme Anwendung, deren Datenübertragung im Wesentlichen auf der RFID Technologie basiert. Das Kürzel RFID steht hierbei für "Radio-Frequency-Identifikation" und bezeichnet eine Identifikation mittels einer auf Radiowellen bzw. elektromagnetischer Wellen basierenden Übertragungsschnittstelle.

Klassische RFID-Systeme bestehen aus einem stationären oder mobilen RFID-Lesegerät und einem RFID-Transponder, welcher aus einem mit einer Antennenanordnung zusammenwirkenden RFID-Chip besteht. Das RFID-Lesegerät umfasst ebenfalls eine Antennenanordnung, über welche ein elektromagnetisches Feld erzeugt wird. Wird die Antennenanordnung des RFID-Transponders in das elektromagnetische Feld des RFID-Lesegerätes gebracht, entsteht eine induktive Signalkopplung zwischen dem RFID-Lesegerätes und dem RFID-Transponder. Durch Dämpfungsmodulation des vom RFID-Lesegerät erzeugten elektromagnetischen Feldes wird zumindest eine unidirektionale Datenübertragung, insbesondere von Identifikationsinformationen vom RFID-Transponder an das RFID-Lesegerät realisiert. Derartige RFID-Systeme arbeiten beispielsweise bei einer Frequenz von 125 kHz bis 13.56 MHz.

Auch können äußerst flach ausgebildete, vorzugsweise passive RFID-Transponder, so genannte "Smart-Labels", auf Objektoberflächen aus Kunststoff aufgebracht werden. Problematisch ist jedoch der Betrieb derartiger passiver RFID-Transponder in unmittelbarer Nähe von elektrisch und/oder magnetisch leitfähigen Materialien, insbesondere leitfähigen Oberflächen mit zumindest einem merklichen Metallanteil, da bedingt durch den magnetischen Wechselfluss in dem elektrisch und/oder magnetisch leitfähigen Material Wirbelströme induziert werden, wodurch das vom RFID-Lesegerät erzeugte elektromagnetische Feld an der Oberfläche des jeweiligen Objekts so stark gedämpft wird, dass die Datenübertragung des auf der Objektoberfläche befindlichen RFID-Transponders behindert wird, und zwar derart stark, dass keine verwertbaren Daten durch das RFID-Lesegerät mehr empfangen werden können.

Die Abschirmung derartiger Wirbelströme stellt in der Technik ein Problem dar, das im Falle der RFID-Technik aufgrund der Geometrie der in unmittelbarer Nähe zur leiten Schicht angeordneten Antennenstruktur bestimmt ist. Dieses Problem kann dadurch gelöst werden, dass eine Abschirmschicht bestehend aus hochpermeable Materialien wie Ferrite oder spezielle Legierungen zwischen die aus zumindest einer Leiterschleife gebildeten Antennenanordnung und der metallischen Objektoberfläche vorgesehen und geeignet orientiert werden, um die induzierten Wirbelströme weitgehend auszuschalten. Zur Abschirmung finden beispielsweise bereits Ferritfolien Anwendung. Aus der WO 96/18173 A2 ist eine Münze mit integrierter elektronischer Identifizierungsvorrichtung bekannt, die in Form eines flachen scheibenförmigen Einsatzelementes in eine zentrale Bohrung durch die Münze eingesetzt wird.

Ausgehend vom bekannten Stand der Technik liegt der Erfindung die Aufgabe zugrunde, eine Münze dahingehend zu verbessern, dass eine einfache und schnelle Überprüfung der Originalität der Münze möglich ist, um gefälschte Münzen von wertlosen Kopien zuverlässig unterscheiden zu können. Die Aufgabe wird ausgehend von den Merkmalen des Oberbegriffes des Patentanspruches 1 durch dessen kennzeichnende Merkmale gelöst.

Der wesentliche Aspekt der erfindungsgemäßen Münze ist darin zu sehen, dass das im Grundelement der Münze aufgenommen flache Einsatzelement aus einem nicht-leitfähigen Material, vorzugsweise Kunststoff hergestellt ist und in dem flachen Einsatzelement zumindest eine RFID-Identifizierungsvorrichtung vorgesehen ist. Besonders vorteilhaft ist die RFID-Identifizierungsvorrichtung durch einen RFID-Transponder gebildet. Der Flächenanteil des flachen Einsatzelementes liegt im Vergleich zur Oberfläche des Grundelementes der Münze unter 5 %, wobei das zumindest eine scheibenartige, metallische Grundelement zumindest eine exzentrische Ausnehmung oder exzentrische Bohrung zur Aufnahme des vorzugsweise scheibenartigen, flachen Einsatzelementes aufweist.

Weiterhin vorteilhaft bildet das Einsatzelement eine Kunststoffummantelung für die RFID-Identifizierungseinrichtung aus. Hierdurch wird die RFID-Identifizierungseinrichtung bzw. der RFID-Transponder effektiv vor Beschädigung im Rahmen des Verarbeitungsprozesses und bei der späteren Verwendung der Münze mit integrierter RFID-Identifizierungsvorrichtung geschützt.

Der RFID-Transponder weist zumindest einen RFID-Chip und zumindest eine mit diesem verbundene Antennenstruktur auf, wobei dieser vorzugsweise als passive Einheit ohne eigene Energieversorgung ausgebildet ist. Der RFID-Chip sowie die zugehörige Antennenstruktur können hierbei besonders vorteilhaft auf einer

Trägerschicht, beispielsweise einer dünnen Papierschicht oder Kunststofffolie aufgebracht sein und der RFID-Transponder zumindest eine elektrisch leitende Abschirmschicht zur Abschirmung des RFID-Chips bzw. dessen Antennenstruktur vor durch das metallische Grundelement verursachte Wirbelströme aufweisen.

Ferner betrifft die Erfindung ein Verfahren zur Herstellung einer Münze mit integrierter RFID-Identifiziervorrichtung aus einem vorzugsweise scheibenartigen, metallischen Grundelement, bei dem besonders vorteilhaft in das Grundelement eine Ausnehmung oder Bohrung eingebracht wird und in die Ausnehmung oder Bohrung ein flaches Einsatzelement mit darin aufgenommener RFID-Identifizierungseinrichtung eingebracht sowie das flache Einsatzelement mit dem Grundelement verpresst wird.

Nachstehend wird die Erfindung in Verbindung mit den Zeichnungen anhand von Ausführungsbeispielen erläutert. Es zeigen:

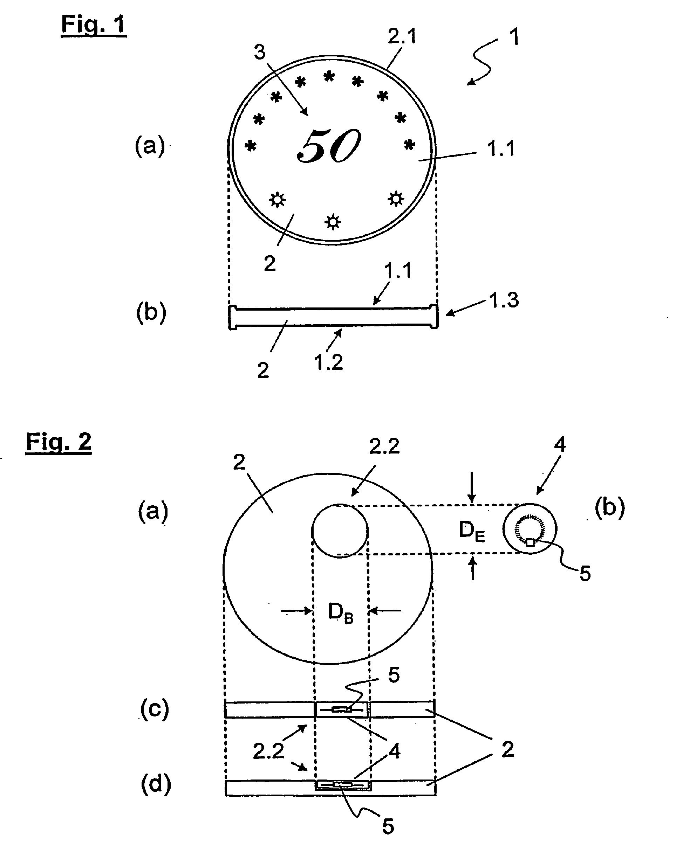

- Fig. 1 a: beispielhaft eine Draufsicht auf eine herkömmliche Münze,
- Fig. 1 b: beispielhaft einen Querschnitt durch die Münze gemäß Figur 1,
- Fig. 2 a: beispielhaft eine Draufsicht auf ein scheibenartiges Grundelement mit Ausnehmung bzw. Bohrung,
- Fig. 2 b: beispielhaft eine Draufsicht auf ein flaches Einsatzelement,
- Fig. 2 c: beispielhaft einen Querschnitt durch das scheibenartiges Grundelement mit in die Bohrung eingesetzten flachen Einsatzelement,
- Fig. 2 d: beispielhaft einen Querschnitt durch das scheibenartiges Grundelement mit in die Ausnehmung eingesetzten flachen Einsatzelement,

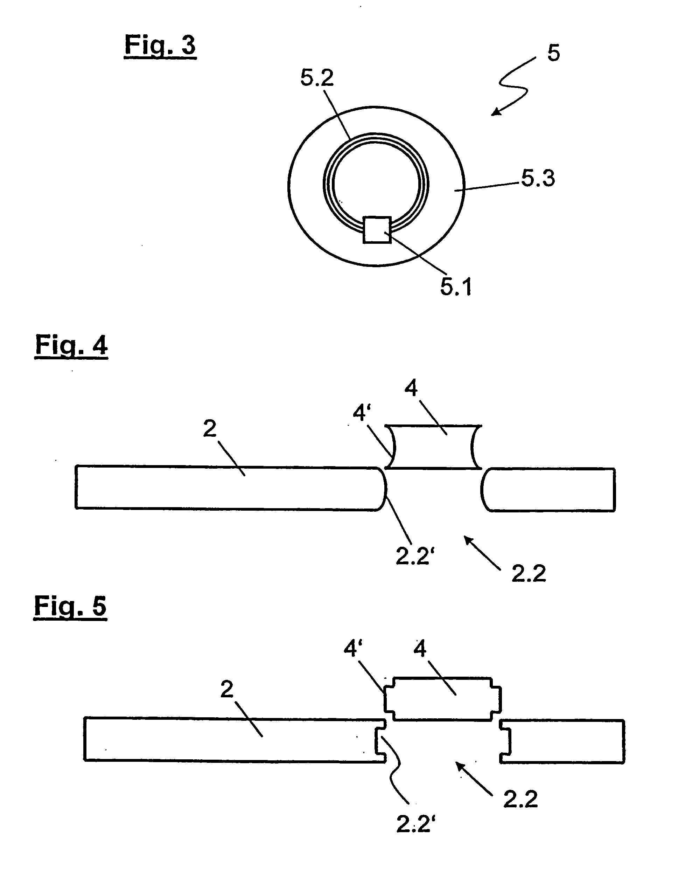

- Fig. 3: beispielhaft eine Draufsicht auf ein flaches Einsatzelement mit integrierter RFID- Identifizierungsvorrichtung,
- Fig. 4: beispielhaft einen Querschnitt durch ein scheibenartiges Grundelement und zugehörigen flachen Einsatzelement mit konkaven bzw. konvexen Randabschnitten und
- Fig. 5: beispielhaft einen Querschnitt durch ein scheibenartiges Grundelement und zugehörigen flachen Einsatzelement mit Nut bzw. Federabschnitten.

In Figur 1 (a) ist beispielhaft eine Draufsicht auf eine Münze 1 und in Figur 1 (b) ein Schnitt durch die Münze 1 gemäß Figur 1 (a) dargestellt, welche als Zahlungsmittel Verwendung findet. Derartige Münzen 1 sind aus dem Stand der Technik hinlänglich bekannt und werden in beliebigster Form und Ausgestaltung hergestellt.

Derartige als Zahlungsmittel eingesetzte Münzen 1 sind üblicherweise ein- oder mehrteilig ausgebildet und aus einem äußerst widerstandsfähigen Material, und zwar aus Metall und/oder aus einer Metalllegierung hergestellt. Diese bestehen im Wesentlichen aus einem scheibenartigen Grundelement 2 oder im Falle von mehrteiligen Münzen 1 aus einem Grundelement 2 und zumindest einem von diesem aufgenommenen weiteren Element. Eine Münze 1 weist üblicherweise zumindest eine Vorderseite 1.1, eine Rückseite 1.2 sowie einen Münzrand 1.3 auf.

Die in Figur 1 (a) und (b) dargestellte Münze 1 weist ferner eine Prägung 3 auf der Vorder- und/oder Rückseite 1.1, 1.2 der Münze 1 auf, über welche beispielsweise eine den Wert der Münze 1 angebende Zahl, ein Symbol, ein Bild oder diverse Verzierungselemente auf die Vorder- und/oder Rückseite 1.1, 1.2 der Münze 1 aufgebracht werden. Das Prinzip der Münzprägung ist hinlänglich bekannt. Hierbei wird ein vorzugsweise metallischer Münzrohling in Form eines scheibenartigen Grundelementes 2 zwischen einem Ober- und einen Unterstempel eingebracht, welche jeweils das Negativ des zu prägenden Motivs aufweisen. Der Ober- und Unterstempel werden miteinander verpresst und somit das jeweilige Motiv in die Vorder- und Rückseite des Grundelementes 2 der Münze 1 eingeprägt. Hierdurch wird insbesondere auch die Stärke des scheibenartigen Grundelementes 2 reduziert, wobei durch den Prägevorgang am Rand der Münze 1 ein äußeren Ring 2.1 entstehen kann, der von der durch das Prägen entstehenden Vorder- und/oder Rückseite der Münze 1 nach unten bzw. oben absteht und somit die ringförmige Auflagefläche der Münze 1 ausbildet.

Das Grundelement 2 der Münze 1 ist vorzugsweise scheibenartig und flach ausgebildet. Das bei bimetallischen Münzen 1 vorgesehene zumindest eine weitere Element kann ebenfalls aus Metall oder aus einer Metalllegierung hergestellt sein und ist in eine im Grundelement 2 vorgesehene Ausnehmung oder Bohrung 2.2 eingesetzt, und zwar vorzugsweise im Zentrumsbereich der Münze 1. Das Grundelement 2 und das weitere Element werden durch plastische Verformung unter Druck miteinander verbunden bzw. miteinander verpresst. Beispielsweise wird das weitere Element in die Ausnehmung oder Bohrung 2.2 des Grundelementes 2 eingepresst, vorzugsweise im Rahmen eines Stanzpressvorgangs.

Zur Herstellung einer erfindungsgemäßen Münze 1 mit integrierter RFID-Identifizierungsvorrichtung 5 wird zunächst ein das scheibenartige Grundelement 2 bildender metallischer Rohling vorgesehen, welcher gegebenenfalls mehrteilig ausgebildet ist. Das scheibenartige Grundelement 2 entspricht bereits im Wesentlichen der Grundform der herzustellenden Münze 1. In Figur 2 (a) ist beispielhaft eine Draufsicht auf das scheibenartige Grundelement 2 zur Herstellung einer Münze 1 dargestellt.

Erfindungsgemäß wird anschließend in das scheibenartige Grundelement 2 zumindest eine Ausnehmung oder Bohrung 2.2 eingebracht, welche zur Aufnahme eines flachen Einsatzelementes 4 vorgesehen ist. Die Form bzw. der Querschnitt des flachen Einsatzelementes 4 sind hierbei an die Form der Ausnehmung oder die Dimensionierung der Bohrung 2.2 im scheibenartigen Grundelement 2 angepasst. Ferner kann die Ausnehmung oder Bohrung 2.2 an nahezu beliebigen Positionen des scheibenartigen Grundelementes 2 vorgesehen werden, und zwar sowohl exzentrisch als auch im Zentrumsbereich der Münze 1. In einer bevorzugten Ausführungsform ist das flache Einsatzelement 4 im Querschnitt kreisförmig ausgebildet, wobei die Dicke des flachen Einsatzelementes 4 geringer als die Dicke des scheibenartigen Grundelementes 2 gewählt ist.

Erfindungsgemäß ist das flache Einsatzelement 4 ferner aus einem nicht-leitfähigen Material, vorzugsweise Kunststoff hergestellt und in dem flachen Einsatzelement 4 zumindest eine RFID-Identifiziervorrichtung 5 vorgesehen. Figur 2 (b) zeigt beispielhaft eine Draufsicht auf das erfindungsgemäße Einsatzelement 4 mit integrierter RFID-Identifiziervorrichtung 5 und Figur 2 (c) bzw. (d) jeweils einen Querschnitt durch das scheibenartige Grundelement 2 mit einem in die Bohrung bzw. Ausnehmung 2.2 eingesetzten Einsatzelement 4 mit integrierter RFID-Identifiziervorrichtung 5. Hierbei liegt der Flächenanteil des flachen Einsatzelementes 4 im Vergleich zur Oberfläche des Grundelementes 2 der Münze 1 unter 5 %, so dass auch nach Einsetzen des flachen Einsatzelementes 4 in das Grundelement 2 der metallische Charakter der Münze 1 erhalten bleibt.

Die RFID-Identifizierungseinrichtung 5 ist beispielsweise als RFID-Transponder ausgebildet, welcher aus einem RFID-Chip 5.1 sowie einer mit diesen verbundenen Antennenstruktur 5.2 besteht. Figur 3 zeigt eine mögliche Ausführungsform eines derartigen RFID-Transponders 5. Der RFID-Transponder 5 besitzt hierbei keine eigene Spannungsversorgung, d.h. ist als passive Einheit ausgebildet und ist somit nur innerhalb des Ansprechbereiches eines RFID-Lesegerätes aktiv. Dabei wird die zum Betreiben des RFID-Transponders 5 bzw. des RFID-Chips 5.1 erforderliche elektrische Energie in an sich bekannter Weise von dem RFID-Lesegerät (in den Figuren nicht dargestellt) über die Antennenstruktur 5.2 aufgenommen und an den RFID-Chip 5.1 weitergeleitet.

Zur Reduzierung der Einbautiefe des RFID-Transponders 5 kann dieser beispielsweise in Form eines Transponder-Inlays ausgebildet sein, d.h. der RFID-Chip 5.1 sowie die zugehörige Antennenstruktur 5.2 sind auf einer Trägerschicht 5.3, beispielsweise einer dünnen Papierschicht oder Kunststofffolie aufgebracht. Die Antennenstruktur 5.2 wird hierbei auf die Trägerschicht 5.3 üblicherweise als vollflächige Kupfer- oder Aluminiumfolie auflaminiert, mit lichtempfindlichem Fotolack beschichtet und nach dem Belichten in einem Ätzbad die der Antennenstruktur 5.2 entsprechenden Bereiche frei geätzt. Anschließend wird der RFID-Chip 5.1 auf die Anschlussstellen der gebildeten Antennenstruktur 5.2 aufgesetzt und mit diesen leitend verbunden. Die Antennenstruktur 5.2 des RFID-Transponders 2 bildet beispielsweise einen Dipol oder eine Induktionsschleife aus. Hierdurch ergibt sich ein äußerst flach ausgebildeter RFID-Transponder 5.

In einem bevorzugten Ausführungsform im Falle des Einsetzens des erfindungsgemäßen Einsatzelementes 4 in eine Ausnehmung 2.2 des scheibenartigen Grundelementes 2 gemäß Figur 2 (d) wird auf der der Antennenstruktur 5.2 gegenüberliegenden Seite der Trägerschicht 5.3 eine elektrisch leitende Abschirmschicht, insbesondere eine Metallfolie aus Alu oder Kupfer vorgesehen, welche näherungsweise die räumliche Erstreckung der Antennenstruktur 5.2 aufweist. Mittels einer derartigen elektrisch leitfähigen Abschirmschicht ist eine effektive Abschirmung des RFID-Chips 5.1 bzw. dessen Antennenstruktur 5.2 vor durch das metallische Grundelement 2 verursachte Wirbelströme möglich. Hierbei sind die ferromagnetischen Partikel der elektrisch leitfähigen Abschirmschicht derart ausgerichtet, dass diese nach Fixierung auf der Trägerschicht 5.3 parallel zu einem in der Antennenstruktur 5.2 des RFID-Transponders 5 induzierten magnetischen Feldes stehen und somit entstehende Wirbelströme effektiv unterdrücken.

Zur Herstellung des flachen Einsatzelementes 4 wird der RFID-Transponder 5 mit einer Kunststoffummantelung 6 umzogen bzw. der RFID-Transponder 5 mit Kunststoff umgossen, wodurch sich ein effektiver Schutz des RFID-Transponders 5 von Außeneinwirkungen entsteht. Hierzu kann beispielsweise ein Spritzgussverfahren Anwendung finden. Der Kunststoff weist hierbei vorzugsweise dieselbe Farbe als das Grundelement 2 auf.

Die Kunststoffummantelung 6 kann auch keramische und/oder metallische Partikel enthalten. Der in die Kunststoffummantelung 6 integrierte RFID-Transponder 5 bzw. das hierdurch gebildete flache, vorzugsweise scheibenartige Einsatzelement 4 wird wie nachfolgend beschrieben in die Ausnehmung bzw. Bohrung 2.2 des Grundelementes 2 eingebracht.

In einer ersten Ausführungsvariante entspricht der Durchmesser D_{E} des kreisförmigen Einsatzelementes 4 näherungsweise dem Durchmesser D_{B} der Ausnehmung bzw. Bohrung 2.2, d.h. es besteht nahezu kein Spiel zwischen dem Durchmesser D_{E} des Einsatzelementes 3 und dem Durchmesser D_{B} der Ausnehmung bzw. Bohrung 2.2. Zum Einbringen des flachen, scheibenartigen Einsatzelementes 4 in die Ausnehmung bzw. Bohrung 2.2 wird das Einsatzelementes 4 über der Ausnehmung bzw. Bohrung 2.2 positioniert und mittels eines Pressvorgangs in die Ausnehmung bzw. Bohrung 2.2 gepresst. Hierdurch ergibt sich eine Pressverbindung zwischen dem Grundelement 2 und dem Einsatzelement 4. Im Anschluss daran erfolgt die Prägung der Münze und ggf. ein Aufbringen weiterer Schutzschichten wie beispielsweise einer Lack- oder Farbschicht.

Gemäß einer zweiten Ausführungsvariante unterschreitet der Durchmesser D_{E} des kreisförmigen Einsatzelementes 4 den Durchmesser D_{B} der Ausnehmung bzw. Bohrung 2.2, d.h. das Spiel zwischen dem Durchmesser D_{E} des Einsatzelementes 4 und dem Durchmesser D_{B} der Ausnehmung bzw. Bohrung 2.2 ist ausreichend, um das Einsatzelement 4 ohne merklichen Kraftaufwand in die Ausnehmung bzw. Bohrung 2.2 des Grundelementes 3 einzuführen. Zu Fixierung des Einsatzelementes 4 in der Ausnehmung bzw. Bohrung 2.2 des Grundelementes 2 wird mittels eines nachfolgenden Pressvorganges zumindest das Grundelement 2 unter Druck derart verformt, dass der Durchmesser D_{B} der Ausnehmung bzw. Bohrung 2.2 abnimmt und somit eine Fixierung des Einsatzelements 4 im Grundelement 2 bewirkt wird. Im Nachgang erfolgt wiederum analog zuvor beschriebenen Ausführungsvariante eine Prägung des Grundelements 2 zur Münze 1.

Das Grundelement 2 der Münze 1 weist beispielsweise vor dem Press- und/oder Prägevorgang eine Dicke von 2,0 bis 3,0 mm, vorzugsweise 2,25 mm auf. Nach dem Press- und/oder Prägevorgang beträgt die Dicke zwischen 1,5 und 2,0 mm, vorzugsweise 1,8 mm. Die Dicke des flachen Einsatzelementes 4 liegt deutlich unter der Dicke des Grundelementes vor dem Press- und/oder Prägevorgang, und zwar zwischen 1,5 und 2,0 mm, vorzugsweise etwa 1,8 mm.

Vorzugsweise ist der für den Pressvorgang vorgesehene Pressstempel derart ausgebildet, dass eine in Richtung des Grundelementes 2 gebildete Wölbung, d.h. konvexe Wölbung aufweist, so dass die auf das Grundelement 2 beim Pressvorgang erzeugte Presskraft radial von innen nach außen wirkt. Während des Pressvorgangs wird zumindest das Grundelement (2) mit einem Pressdruck zwischen 100 und 250 Nm beaufschlagt.

Um eine Beschädigung der im Einsatzelement 4 integrierten RFID-Identifierungseinrichtung 5 durch den Prägevorgang zu vermeiden, kann der Prägestempel im Bereich der RFID-Identifierungseinrichtung 5 eine Ausnehmung aufweisen, welche in Ihrer Form und Dimensionierung dem Einsatzelement 4 entspricht. Auch kann zur Ausbildung des äußeren Randes 2.1 der Münze 1 der Durchmesser des Prägestempels kleiner als der Durchmesser des Grundelementes 2 gewählt sein.

Zur Erhöhung der Verbindungsfestigkeit sind in einer bevorzugten Ausführungsform der äußere Rand 4' des Einsatzelementes 3' und der innere Rand 2.2' der Ausnehmung bzw. Bohrung 2.2 zu Erstellung einer formschlüssigen Verbindung ausgebildet. Insbesondere kann gemäß dem in Figur 4 dargestellten Ausführungsbeispiel der äußere Rand 4' des Einsatzelementes 3' konkav und der innere Rand 2.2' der Ausnehmung bzw. Bohrung 2.2 konvex oder vice versa ausgebildet sein.

Ebenso kann gemäß dem in Figur 5 dargestellten Ausführungsbeispiel die formschlüssige Verbindung als Nut- und Federverbindung realisiert sein, und zwar beispielsweise der äußere Rand 4' des Einsatzelementes 3' zumindest eine Feder und der innere Rand 2.2' der Ausnehmung bzw. Bohrung 2.2 zumindest eine Nut oder vice versa aufweisen.

Die Erfindung wurde voranstehend an einem Ausführungsbeispiel beschrieben. Es versteht sich, dass zahlreiche Änderungen und Modifikationen der Erfindung möglich sind, ohne dass hierdurch der Erfindungsgedanke verlassen wird.

### Bezugszeichenliste

- 1: Münze
- 1.1: Vorderseite
- 1.2: Rückseite
- 1.3: Münzrand
- 2: Grundelement
- 2.1: äußerer Ring
- 2.2: Ausnehmung oder Bohrung
- 2.2': innerer Rand
- 3: Prägung
- 4: Einsatzelement
- 4': äußerer Rand
- 5: RFID-Identifizierungseinrichtung bzw. RFID-Transponder
- 5.1: RFID-Chip
- 5.2: Antennenstruktur
- 5.3: Trägerschicht
- 6: Kunststoffummantelung

- D_{E}: Durchmesser des kreisförmigen Einsatzelementes
- D_{B}: Durchmesser der Ausnehmung bzw. Bohrung

## Patentansprüche

1. Münze bestehend aus einem vorzugsweise scheibenartigen, metallischen Grundelement (2) und zumindest einem flachen Einsatzelement (4), welches im scheibenartigen metallischen Grundelement (2) aufgenommen ist, wobei das flache Einsatzelement (4) aus einem nicht-leitfähigen Material, vorzugsweise Kunststoff hergestellt ist und in dem flachen Einsatzelement (4) zumindest ein RFID-Transponder (5) umfassend zumindest einen RFID-Chip (5.1) und zumindest eine mit diesem verbundene Antennenstruktur (5.2) vorgesehen ist, **dadurch gekennzeichnet, dass** der Flächenanteil des flachen Einsatzelementes (4) im Vergleich zur Oberfläche des Grundelementes (2) der Münze (1) unter 5 % liegt und dass das zumindest eine scheibenartige, metallische Grundelement (2) zumindest eine exzentrische Ausnehmung oder exzentrische Bohrung (2.2) zur Aufnahme des vorzugsweise scheibenartigen, flachen Einsatzelementes (4) aufweist.

2. Münze nach Anspruch 1, **dadurch gekennzeichnet, dass** der Kunststoff eine Kunststoffummantelung (6) des RFID-Transponders (5) ausbildet.

3. Münze nach einem der Ansprüche 1 oder 2, **dadurch gekennzeichnet, dass** der RFID-Transponder (5) als passive Einheit ohne eigene Energieversorgung ausgebildet ist.

4. Münze nach einem der Ansprüche 1 bis 34, **dadurch gekennzeichnet, dass** der RFID-Chip (5.1) sowie die zugehörige Antennenstruktur (5.2) auf einer Trägerschicht (5.3), beispielsweise einer dünnen Papierschicht oder Kunststofffolie aufgebracht sind.

5. Münze nach einem der Ansprüche 1 bis 4, **dadurch gekennzeichnet, dass** der RFID-Transponder (5) zumindest eine elektrisch leitende Abschirmschicht zur Abschirmung des RFID-Chips (5.1) bzw. dessen Antennenstruktur (5.2) vor durch das metallische Grundelement (2) verursachte Wirbelströme aufweist.

6. Münze nach einem der vorhergehenden Ansprüche, **dadurch gekennzeichnet, dass** das flache Einsatzelement (4) mit dem das flache Einsatzelement (4) umgebenden Grundelement (2) verpresst ist.

7. Verfahren zur Herstellung einer Münze (1) mit integrierten RFID-Transponder (5) aus einem vorzugsweise scheibenartigen, metallischen Grundelement (2), bei dem in das Grundelement (2) eine Ausnehmung oder Bohrung (2.2) exzentrisch eingebracht wird, bei dem in die Ausnehmung oder Bohrung (2.2) ein flaches Einsatzelement (4) mit darin aufgenommenen RFID-Transponder (5) umfassend zumindest einen RFID-Chip (5.1) und zumindest eine mit diesem verbundene Antennenstruktur (5.2) eingebracht wird, bei dem das flache Einsatzelement (4) mit dem Grundelement (2) verpresst wird und bei dem das Grundelement (2) mit in der Ausnehmung oder Bohrung (2.2) aufgenommenen flachen Einsatzelement (4) geprägt wird, wobei der Flächenanteil des flachen Einsatzelementes (4) im Vergleich zur Oberfläche des Grundelementes (2) der Münze (1) unter 5 % liegt.

8. Verfahren nach Anspruch 7, **dadurch gekennzeichnet, dass** das flache Einsatzelement (4) aus einem nicht-leitfähigen Material, vorzugsweise Kunststoff hergestellt wird.

9. Verfahren nach einem der Ansprüche 7 oder 8, **dadurch gekennzeichnet, dass** auf die Ober- und Unterseite (1.1, 1.2) der Münze eine Schutzschicht beispielsweise in Form einer Lack- oder Farbschicht aufgebracht wird und/oder dass das im Grundelement (2) eingebrachte flache Einsatzelement (4) beim Pressvorgang ausgespart wird.

## Claims

1. A coin consisting of a preferably disc-like metallic base element (2) and at least one flat insert element (4), which is received in the disc-like metallic base element (2), wherein the flat insert element (4) is produced from a non-conductive material, preferably plastic and at least one RFID transponder (5) comprising at least one RFID chip (5.1) and at least one antenna structure (5.2) connected to the same is provided in the flat insert element (4), **characterised in that** the area proportion of the flat insert element (4) is less than 5% compared to the surface of the base element (2) of the coin (1) and **in that** the at least one disc-like metallic base element (2) has at least one eccentric recess or eccentric bore (2.2) for receiving the preferably disc-like, flat insert element (4).

2. The coin according to claim 1, **characterised in that** the plastic forms a plastic coating (6) of the RFID transponder (5).

3. The coin according to one of claims 1 or 2, **characterised in that** the RFID transponder (5) is designed as a passive unit without its own energy supply.

4. The coin according to one of claims 1 to 3, **characterised in that** the RFID chip (5.1) and the associated antenna structure (5.2) are applied on a carrier layer (5.3), for example on a thin paper layer or plastic film.

5. The coin according to one of claims 1 to 4, **characterised in that** the RFID transponder (5) has at least one electrically conductive shielding layer for shielding the RFID chip (5.1) or the antenna structure (5.2) thereof from eddy currents caused by the metallic base element (2).

6. The coin according to one of the preceding claims, **characterised in that** the flat insert element (4) is compression moulded with the base element (2) surrounding the flat insert element (4).

7. A method for producing a coin (1) having an integrated RFID transponder (5) made from a preferably disc-like metallic base element (2), in which a recess or bore (2.2) is eccentrically introduced into the base element (2), in which a flat insert element (4) having an RFID transponder (5) received therein, comprising at least one RFID chip (5.1) and at least one antenna structure (5.2) connected to the same, is introduced into the recess or bore (2.2), in which the flat insert element (4) is compression moulded with the base element (2) and in which the base element (2) is embossed with the flat insert element (4) received in the recess or bore (2.2), wherein the area proportion of the flat insert element (4) is less than 5% compared to the surface of the base element (2) of the coin (1).

8. The method according to Claim 7, **characterised in that** the flat insert element (4) is produced from a non-conductive material, preferably plastic.

9. The method according to one of Claims 7 or 8, **characterised in that** a protective layer, for example in the form of a varnish or paint layer is applied onto the upper side and underside (1.1, 1.2) of the coin and/or **in that** the flat insert element (4) introduced in the base element (2) is recessed during the pressing process.

## Revendications

1. Pièce de monnaie se composant d'un élément de base (2) métallique de préférence en forme de disque et d'au moins un élément d'insertion plat (4), lequel est logé dans l'élément de base (2) métallique en forme de disque, l'élément d'insertion plat (4) étant fabriqué en un matériau non conducteur, de préférence en plastique et au moins un transpondeur RFID (5) comprenant au moins une puce RFID (5.1) et au moins une structure d'antenne (5.2) en liaison avec celle-ci étant prévu dans l'élément d'insertion plat (4), **caractérisé en ce que** le pourcentage surfacique de l'élément d'insertion plat (4) est inférieur à 5% en comparaison avec la surface de l'élément de base (2) de la pièce de monnaie (1) et **en ce que** l'au moins un élément de base (2) métallique en forme de disque présente au moins un évidement excentrique ou un alésage excentrique (2.2) pour la réception de l'élément d'insertion plat (4) de préférence en forme de disque.

2. Pièce de monnaie selon la revendication 1, **caractérisée en ce que** le plastique forme une enveloppe en plastique (6) du transpondeur RFID (5).

3. Pièce de monnaie selon l'une des revendications 1 ou 2, **caractérisée en ce que** le transpondeur RFID (5) est réalisé en tant qu'unité passive sans alimentation d'énergie propre.

4. Pièce de monnaie selon l'une des revendications 1 à 3, **caractérisée en ce que** la puce RFID (5.1) ainsi que la structure d'antenne (5.2) associée sont appliquées sur une couche de support (5.3), par exemple une mince couche de papier ou un film en plastique.

5. Pièce de monnaie selon l'une des revendications 1 à 4, **caractérisée en ce que** le transpondeur RFID (5) présente au moins une couche de protection électro-conductrice pour la protection de la puce RFID (5.1) ou de sa structure d'antenne (5.2) contre des courants de Foucault provoqués par l'élément de base (2) métallique.

6. Pièce de monnaie selon l'une des revendications précédentes, **caractérisée en ce que** l'élément d'insertion plat (4) est pressé avec l'élément de base (2) entourant l'élément d'insertion plat (4).

7. Procédé pour la fabrication d'une pièce de monnaie (1) avec un transpondeur RFID (5) intégré à partir d'un élément de base (2) métallique de préférence en forme de disque, dans lequel un évidement ou un alésage (2.2) est réalisé de manière excentrique dans l'élément de base (2), dans lequel un élément d'insertion plat (4) avec un transpondeur RFID (5) logé dedans comprenant au moins une puce RFID (5.1) et au moins une structure d'antenne (5.2) en liaison avec celle-ci est intégré dans l'évidement ou l'alésage (2.2), dans lequel l'élément d'insertion plat (4) est pressé avec l'élément de base (2) et dans lequel l'élément de base (2) avec l'élément d'insertion plat (4) logé dans l'évidement ou l'alésage (2.2) est estampé, moyennant quoi le pourcentage surfacique de l'élément d'insertion plat (4) est inférieur à 5% en comparaison avec la surface de l'élément de base (2) de la pièce de monnaie (1).

8. Procédé selon la revendication 7, **caractérisé en ce que** l'élément d'insertion plat (4) est fabriqué en un matériau non conducteur, de préférence en plastique.

9. Procédé selon l'une des revendications 7 ou 8, **caractérisé en ce que** l'on applique, sur le dessus et le dessous (1.1, 1.2) de la pièce de monnaie, une couche de protection, par exemple sous la forme d'une couche de vernis ou de couleur et/ou **en ce que** l'élément d'insertion plat (4) intégré dans l'élément de base (2) est évidé lors du processus de pressage.
